# FASCICULE DE BREVET EUROPEEN

(11) **EP 1 502 841 B1**
(45) Date de publication et mention de la délivrance du brevet: **10.09.2008**
(21) Numéro de dépôt: 04291790.6
(22) Date de dépôt: 13.07.2004
(51) Int. Cl.: B62D 25/08, B60Q 1/04, B25B 27/00

(54) **Ensemble de bloc-avant de véhicule automobile comportant des moyens d'ajustement de la position des blocs optiques, outil de réglage prévu à cet effet, et procédé de montage d'un tel bloc-avant**
Frontendmodul für ein Fahrzeug mit Mitteln zum Einpassen der Leuchtenbaugruppe, Handwerkzeug für die Einstellung der Position und Montageverfahren für ein solches Frontend Modul
Front-end module for a car comprising means for adjusting the position of the headlamps, handtooling for that purpose and assembly process of such a front end module

(30) Priorité: 30.07.2003 FR 0309404
(43) Date de publication de la demande: 02.02.2005
(73) Titulaire: Faurecia Bloc Avant, 92000 Nanterre (FR)
(72) Inventeur: Lazzeroni, Eric, 73642 Welzhein (DE); Bierjon, Didier, 25400 Audincourt (FR)
(74) Mandataire: Hadjadj, Laurent

(56) Documents cités:
- EP-A- 1 232 932
- EP-A- 1 484 216
- FR-A- 2 708 554
- PATENT ABSTRACTS OF JAPAN vol. 2003, no. 05, 12 mai 2003 (2003-05-12) & JP 2003 011848 A (NISSAN MOTOR CO LTD), 15 janvier 2003 (2003-01-15)

## Description

La présente invention concerne un ensemble de bloc-avant de véhicule automobile comprenant une face avant, qui présente une partie centrale et deux parties latérales, une peau de pare-chocs, deux poutres flexibles s'étendant latéralement et formant des supports de la peau de pare-chocs, dont chacune a une première extrémité reliée à la partie centrale et une deuxième extrémité destinée à être reliée à une partie avant d'aile de carrosserie du véhicule, et deux blocs optiques, dont chacun est fixé rigidement à une poutre respective.

Un tel ensemble est par exemple décrit dans le document EP-A-1 232 932.

La structure décrite dans ce document permet un positionnement automatique et permanent des contours visibles des blocs optiques par rapport aux extrémités d'ailes correspondantes et à la peau de pare-chocs. Dans le même temps, cette structure assure un positionnement relatif précis des extrémités d'ailes et de la peau de pare-chocs.

Il peut également être souhaitable, pour améliorer les qualités esthétiques du véhicule, d'assurer une continuité d'aspect des blocs optiques et de la peau de pare-chocs avec d'autres éléments de carrosserie, tels que le capot du véhicule.

L'invention a pour but de fournir un bloc-avant sous la forme d'un module pré-assemblé, dont les éléments d'aspect, constitués par les blocs optiques et la peau de pare-chocs, peuvent être facilement réglés et bloqués en position, pour assurer une continuité d'aspect avec des éléments de carrosserie tels que le capot, après montage du module sur la caisse du véhicule.

A cet effet, un ensemble de bloc-avant selon EP 1 484 216 A1, publié le 8.12.2004, comprend des moyens de pré-positionnement et de guidage reliant la première extrémité de la poutre à la partie centrale, qui sont adaptés pour assurer un pré-positionnement autorisant un déplacement sensiblement axial de ladite première extrémité par rapport à la face avant, et des moyens de blocage en position de ladite première extrémité par rapport à la face avant,
lesdits moyens de pré-positionnement et de guidage comportant des moyens d'entraînement en translation axiale de la première extrémité par rapport à la face avant, et des moyens de réception, dans une position d'interaction avec lesdits moyens d'entraînement, d'un outil de réglage amovible,
de sorte que, lorsque la première extrémité est pré-positionnée mais non bloquée en position, un actionnement de l'outil de réglage provoque un déplacement axial de la première extrémité par rapport à la face avant, et ainsi un ajustement de la position du bloc optique et de la peau de pare-chocs par rapport au capot.

L'ensemble de bloc avant selon l'invention présente pour sa part les caractéristiques de la revendication 1 et est monté selon le procédé de la revendication 9.

Suivant d'autres caractéristiques de l'ensemble de bloc-avant selon l'invention :
- lesdits moyens de pré-positionnement et de guidage comprennent un manchon tubulaire solidaire de la face avant et un doigt complémentaire coaxial, solidaire de la poutre du côté de sa première extrémité, et susceptible de coulissement axial dans ledit manchon ;
- lesdits moyens de blocage comprennent un organe de fixation rigide du doigt dans le manchon, tel qu'un ensemble vis-écrou, l'un parmi le doigt et le manchon étant formé avec une lumière oblongue allongée axialement, destinée à recevoir à engagement ledit organe de fixation dans plusieurs positions axiales relatives du manchon et du doigt ;
- lesdits moyens d'entraînement comprennent une crémaillère axiale solidaire du doigt, pouvant coopérer avec un pignon complémentaire solidaire de l'outil de réglage ; et
- les moyens de réception d'outil comportent des lumières formées en vis-à-vis dans le manchon, de façon à constituer des paliers de support à rotation de l'outil, selon un axe de rotation transversal par rapport à l'axe commun du manchon et du doigt.

L'invention a également pour objet un outil de réglage de la position d'un bloc optique et d'une peau de pare-chocs d'un ensemble de bloc avant tel que décrit précédemment, caractérisé en ce qu'il comprend un arbre pouvant s'engager à rotation de façon amovible dans les moyens de réception, un pignon complémentaire de la crémaillère, prévu pour coopérer avec cette dernière lorsque l'arbre est engagé dans les moyens de réception, et un moyen déformable d'actionnement en rotation de l'arbre, adapté pour permettre, à un utilisateur placé à distance de l'arbre, d'actionner ce dernier en rotation.

Suivant des caractéristiques optionnelles de l'outil selon l'invention :
- ledit moyen déformable d'actionnement comprend deux sections de câble de traction reliées à l'arbre, de façon qu'une traction exercée sur l'une des deux sections entraîne l'arbre en rotation dans un sens, et qu'une traction exercée sur l'autre section entraîne l'arbre en rotation dans l'autre sens ; et
- ledit moyen d'actionnement comprend une poignée de manoeuvre reliant les deux sections de câble à distance de l'arbre.

L'invention vise enfin un procédé d'assemblage d'un ensemble de bloc-avant tel que décrit précédemment, et de montage d'un tel ensemble de bloc-avant sur une caisse de véhicule automobile, dans lequel on réalise successivement les étapes suivantes :
- on monte chaque bloc optique sur la poutre respective
- on pré-positionne chaque poutre au niveau de sa première extrémité sur la face avant, et on fixe la peau de pare-chocs sur l'ensemble ainsi obtenu ;
- on monte l'ensemble de bloc-avant ainsi obtenu sur la caisse du véhicule, et on fixe chaque poutre par sa deuxième extrémité à la partie avant d'aile respective ;
- on engage un outil de réglage fonctionnant par engrènement, notamment tel que décrit précédemment dans les moyens de réception ;
- on ferme le capot ;
- on manoeuvre l'outil de façon à déplacer la première extrémité par rapport à la face avant, et ainsi à réaliser un ajustement de la position du bloc optique et de la peau de pare-chocs par rapport au capot ;
- on ouvre le capot ;
- on bloque en position la première extrémité de chaque poutre par rapport à la face avant ; et
- on dégage l'outil de réglage des moyens de réception.

Un mode de réalisation de l'invention va maintenant être décrit plus en détail en se référant aux dessins annexés, sur lesquels :
- les Figures 1 et 2 sont des vues éclatées en perspective avant, suivant des directions différentes, d'une partie d'un ensemble de bloc avant suivant l'invention, d'une partie avant d'aile de carrosserie correspondante, et d'une partie de capot ;
- la Figure 3 est une vue schématique en perspective des moyens de pré-positionnement et de guidage de l'ensemble de bloc-avant représenté sur les figures précédentes, et d'un outil de réglage conforme à l'invention ;
- les Figures 4 et 5 sont des vues en coupe dans des plans axiaux verticaux, respectivement selon les lignes 4-4 et 5-5 indiquées sur la Figure 3, montrant une partie de capot du véhicule et les éléments de la Figure 3 en situation de réglage ; et
- les figures 6 et 7 sont des vues illustrant le mode d'utilisation d'un outil de réglage conforme à l'invention, dans le cadre d'un procédé d'assemblage suivant l'invention, respectivement pour deux modèles différents de véhicule.

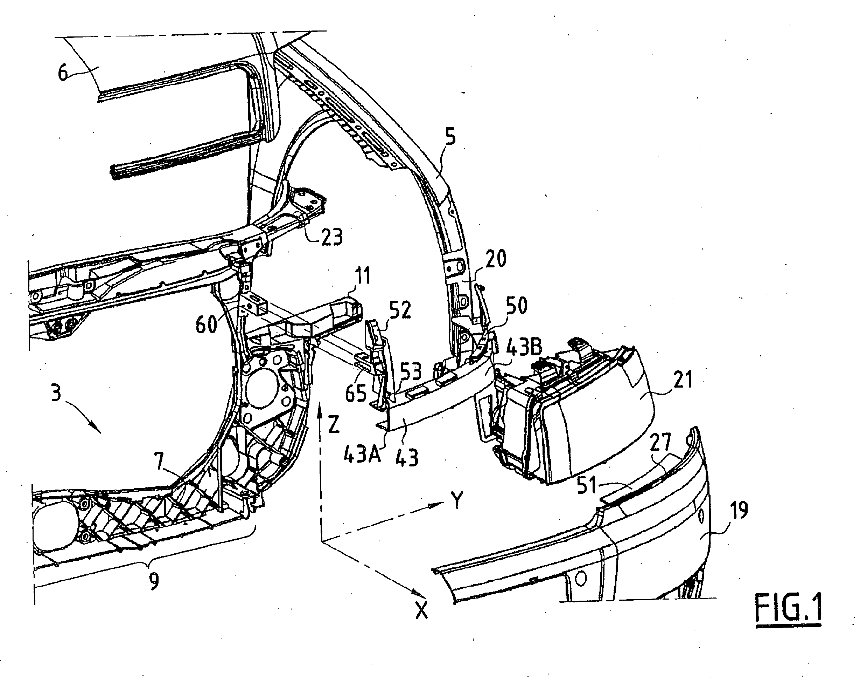

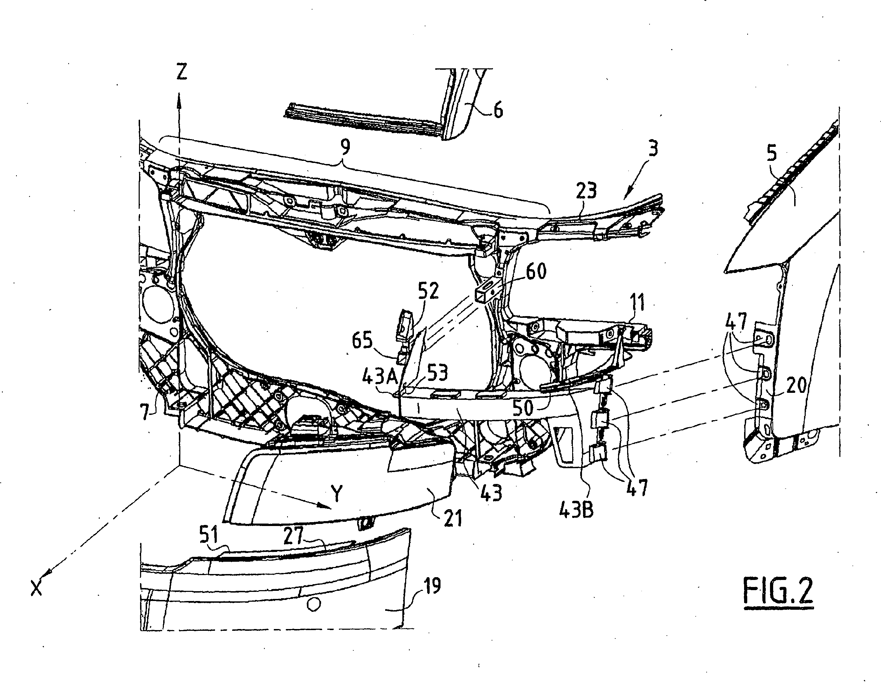

Sur les Figures 1 et 2, on a représenté une partie avant d'un véhicule automobile, comprenant un ensemble de bloc-avant 3 (représenté partiellement), une extrémité avant 5 d'une aile de carrosserie, et une extrémité avant 6 d'un capot.

On a orienté ces Figures 1 et 2, ainsi que les Figures suivantes 3 et 4, suivant trois axes X, Y, Z qui correspondent à l'orientation usuelle du véhicule, à savoir respectivement l'axe longitudinal X orienté dans la direction de marche avant, l'axe transversal Y orienté de droite à gauche, du point de vue du conducteur, et l'axe vertical Z orienté de bas en haut. Tous les termes utilisés dans la suite de la description, pouvant indiquer un sens ou un positionnement, doivent être compris en référence à ce système d'axes.

La partie avant de véhicule représentée sur les Figures 1 et 2 est symétrique ou quasi-symétrique par rapport à un plan médian vertical du véhicule. Pour plus de clarté, on n'a représenté sur ces Figures et on ne décrira que la portion située du côté gauche du véhicule.

L'ensemble de bloc-avant 3 du véhicule, ou plus simplement « bloc-avant », comporte une structure essentiellement rigide constituée par une face avant 7, laquelle présente une partie centrale 9 et une partie latérale 11.

Le bloc-avant 3 comporte en outre une peau de pare-chocs 19, réalisée par exemple d'une pièce de matériau plastique, est disposée sur toute la largeur de la face avant 7, en dépassant latéralement des parties latérales 11 de la face avant, et en s'appliquant sur un bord de l'extrémité avant d'aile 5, en coïncidence avec celui-ci. Le bloc avant 3 comporte de plus, de chaque côté latéral, un bloc optique 21 monté sur la face avant dans des formes complémentaires, sous un bord supérieur 23 de cette dernière, et au-dessus d'un bord supérieur 27 de la peau de pare-chocs 19.

Le bloc avant 3 comporte par ailleurs, de chaque côté latéral, une poutre galbée 43 s'étendant essentiellement latéralement dans la direction de la peau de pare-chocs 19. Cette poutre galbée 43 a une première extrémité 43A reliée à la partie centrale 9 de la face avant, par l'intermédiaire de moyens de pré-positionnement et de blocage complémentaires qui seront détaillés par la suite, et une deuxième extrémité 43B fixée rigidement au bord 20 de la partie avant d'aile, par des moyens d'accrochage complémentaires 47.

La poutre 43 est flexible dans la mesure où, lorsque la deuxième extrémité 43B est fixée sur le bord 20, la première extrémité 43A est susceptible de débattement par déformation élastique de la poutre 43, et dans la mesure où la poutre 43 peut ainsi se déformer sans déformation sensible de la partie d'aile. En outre, la rigidité à la flexion de la face avant 7 est très supérieure à celle de la poutre 43.

Sur une partie supérieure de la poutre 43 est formée une gouttière 50 qui s'étend transversalement, suivant la direction générale de la poutre 43. Cette gouttière 50 reçoit un volet 51 formé en saillie du bord supérieur 27 de la peau de pare-chocs 19, de façon à réaliser un accrochage de la peau de pare-chocs 19 sur la poutre 43, avec possibilité de mouvements relatifs d'ajustement suivant la direction générale de la poutre 43.

La poutre 43 est adaptée pour supporter le bloc optique 21 respectif. A cet effet, la poutre 43 est pourvue de faces planes verticales d'appui 52, 53, tournées vers la deuxième extrémité 43B, ou extrémité extérieure, de la poutre 43, et destinées à coopérer avec des bossages correspondants en saillie vers l'extérieur du bloc optique 21, de façon que ce dernier soit positionné avec précision par rapport à la poutre 43 selon la direction Y. La fixation rigide du bloc optique 21 sur la poutre 23 est assurée par des moyens de blocage (non représentés) tels que des paires vis/écrous.

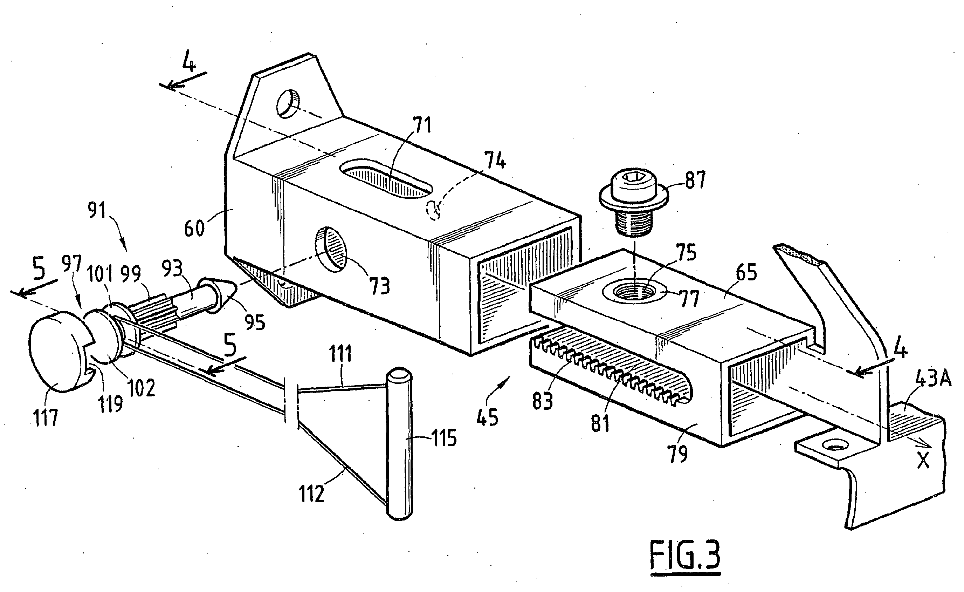

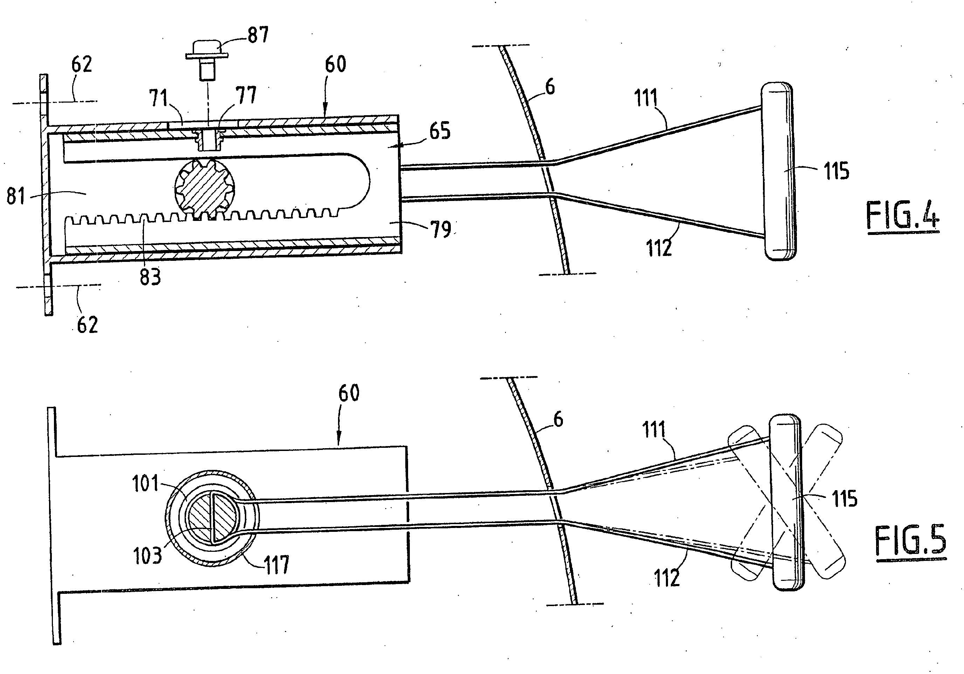

On se réfère à présent aux Figures 3 et 4 pour décrire avec plus de précision les moyens de pré-positionnement et de guidage.

On notera que, sur la Figure 3, la forme de la partie de poutre 43 qui présente la face d'appui verticale 52 a été nettement simplifiée, pour plus de clarté de la Figure.

Ces moyens 45 comportent un manchon creux 60 de section rectangulaire, fixé rigidement par des moyens de fixation 62 à la partie centrale 9 de la face avant, de façon à faire saillie de cette dernière vers l'avant, suivant son axe longitudinal orienté sensiblement suivant l'axe longitudinal du véhicule X. En réalité, l'axe du manchon pourra éventuellement être décalé angulairement par rapport à l'axe X.

Les moyens de pré-positionnement et de guidage 45 comprennent en outre, formé en saillie vers l'arrière de l'extrémité 43A de la poutre, un doigt 65 de forme extérieure complémentaire de la surface intérieure du manchon 60, de façon à pouvoir s'engager coaxialement dans ce dernier. Le doigt 65 se présente également sous une forme de manchon tubulaire de section rectangulaire.

Sur la Figure 3, le manchon 60 et le doigt 65 sont représentés en position d'attente d'engagement mutuel, tandis que sur la Figure 4, ils sont représentés emboîtés, en situation de réglage de leur position relative.

Le manchon 60 est formé avec un premier trou oblong traversant 71 ménagé dans sa paroi supérieure, ce trou 71 étant allongé suivant la direction X de l'axe du manchon 60.

Dans les parois latérales du manchon 60 sont formées deux lumières 73, 74 circulaires, placées en vis-à-vis l'une de l'autre de façon coaxiale, selon un axe orthogonal à la direction X. L'une, 73, de ces lumières est de diamètre supérieur à l'autre, 74.

Le doigt 65 est pourvu, dans sa paroi supérieure, d'un trou circulaire 75, dont le centre coïncide, lorsque le doigt 65 est engagé dans le manchon 60, avec l'axe longitudinal du trou oblong 71, ce trou 75 étant de diamètre sensiblement égal à la largeur du trou oblong 71. Le doigt 65 est en outre solidaire intérieurement d'un écrou 77, par exemple soudé, débouchant dans le trou 75.

D'autre part, sur l'une, 79, des parois latérales du doigt 65, est formée une échancrure 81, dont le bord inférieur présente une denture formant crémaillère axiale 83. La crémaillère 83 est prévue pour être accessible à un pignon engagé au travers de la lumière 73 depuis l'extérieur du manchon 60, comme cela sera décrit ultérieurement.

L'écrou 77 est prévu pour recevoir une vis complémentaire 87 susceptible de traverser le trou oblong et de porter, par sa tête, sur la paroi supérieure du manchon 60, lors de son serrage dans l'écrou 77, de façon à fixer le doigt 65 dans le manchon 60.

L'organe de fixation constitué de l'écrou 77 et de la vis 87 définit ainsi des moyens de blocage en position de la première extrémité 43A de la poutre par rapport à la face avant 7.

Sur les Figures 3 et 4, on a également représenté un outil 91 spécialement adapté pour déplacer axialement le doigt 65 dans le manchon 60, selon des courses de réglage relativement faibles, afin de régler la position de la première extrémité de poutre 43A par rapport à la face avant 7, et ainsi ajuster la position du bloc optique 21 et de la peau de pare-chocs 19 par rapport au capot 6.

Cet outil comprend essentiellement un arbre 93, pourvu à une extrémité d'une pointe conique 95 et, à l'autre extrémité, d'une tête d'entraînement 97.

Dans une portion intermédiaire, du côté de la tête d'entraînement 97, l'outil 91 est formé avec un pignon 99, dont la denture est complémentaire de celle de la crémaillère 83, comme illustré sur la Figure 4. Le diamètre extérieur du pignon 99 est inférieur au diamètre de la lumière 73.

Comme cela est visible sur les Figures 3 et 5, la tête d'entraînement 97 présente deux disques coaxiaux 101, 102 de même diamètre, supérieur au diamètre extérieur du pignon 99 et à celui de la lumière 73. Entre ces disques 101, 102, est prévue une gorge 103 formée diamétralement dans la section de l'arbre comprise entre les deux disques 101, 102.

L'outil 91 comprend en outre un moyen déformable d'actionnement en rotation de l'arbre 93, sous la forme de deux sections de câble 111, 112 solidaires, à une extrémité, de la tête d'entraînement 97 et, à l'autre extrémité, d'une poignée de manoeuvre allongée 115. Les deux sections de câble 111, 112 font partie, dans l'exemple représenté, d'un même câble dont une partie intermédiaire est enroulée sur l'arbre 93 entre les disque 101, 102, et dont une section est engagée dans la gorge 103, les deux extrémités libres du câble étant reliées à deux extrémités respectives de la poignée 115.

Un capuchon 117, pourvu d'une encoche périphérique 119, est prévu pour s'emmancher axialement sur les deux disque 101, 102, et pour confiner la section de câble liée à l'arbre 93. les sections 111, 112 font saillie vers l'extérieur de la tête d'entraînement au travers de l'encoche 119.

Sur la Figure 3, le capuchon 117 est représenté démonté du reste de l'outil, de façon à laisser apparente la section du câble reliée à l'arbre.

On comprend, d'après ce qui précède, que l'outil 91 peut être actionné à distance de l'arbre 93, et donc du manchon 60 et du doigt 65, par un utilisateur. L'outil 91 est prévu plus particulièrement pour être utilisé depuis une zone extérieure du véhicule en cours du montage, à l'avant de ce dernier, lorsque le capot 6 est fermé. Ainsi, l'utilisateur peut actionner l'outil 91 en agissant sur la poignée 115, en constatant visuellement l'effet produit sur la position relative du bloc optique, de la peau de pare-chocs, et du capot.

L'outil 91 fonctionne de la façon qui va être à présent explicitée.

A partir de la position représentée à la Figure 3, le doigt 65 peut être emboîté dans le manchon 60, la vis 87 n'étant pas montée dans l'écrou 77. L'opérateur peut alors engager l'outil 91 au travers de la lumière 73, jusqu'à ce que la pointe conique 95 s'engage dans la lumière 74. Les lumières 73, 74 définissent alors des paliers de support à rotation de l'arbre 93 dans le manchon 60, la lumière 74 définissant de plus, avec la pointe conique 95 de l'outil, une butée axiale limitant l'engagement de l'outil dans le manchon 60. Le pignon 99 traverse alors intégralement la lumière 73 et s'engage avec la crémaillère 83, en formant une liaison par engrenage. Le disque 101 porte, dans cette position, sur la face latérale correspondante du manchon, autour de la lumière 73.

Pour déplacer le doigt 65 dans le manchon 60 axialement, l'opérateur doit tendre les sections de câble 111, 112 en exerçant une traction sur la poignée 115, et faire basculer cette dernière, à partir de la position sensiblement verticale représentée à la Figure 5. Pour cela, il doit attirer à lui l'extrémité supérieure ou l'extrémité inférieure de la poignée 115, comme illustré en traits mixtes sur la Figure 5.

On comprend que le basculement de la poignée dans le plan vertical provoque la rotation de l'arbre 93, dans un sens ou dans l'autre, et ainsi un déplacement axial correspondant, dans un sens ou dans l'autre, du doigt 65 dans le manchon 60.

La démultiplication de la liaison entre le pignon 99 et la crémaillère 83 permet d'obtenir des déplacements axiaux de relativement faible amplitude, avec des basculements de la poignée d'amplitude relativement importante, et ainsi d'obtenir des réglages extrêmement fins.

Après la phase de réglage, l'opérateur peut bloquer le doigt 65 dans le manchon 60, en serrant la vis 87 dans l'écrou 77, de façon à conserver le réglage.

Il peut ensuite retirer l'outil 91 des lumières 73, 74 de réception d'outil.

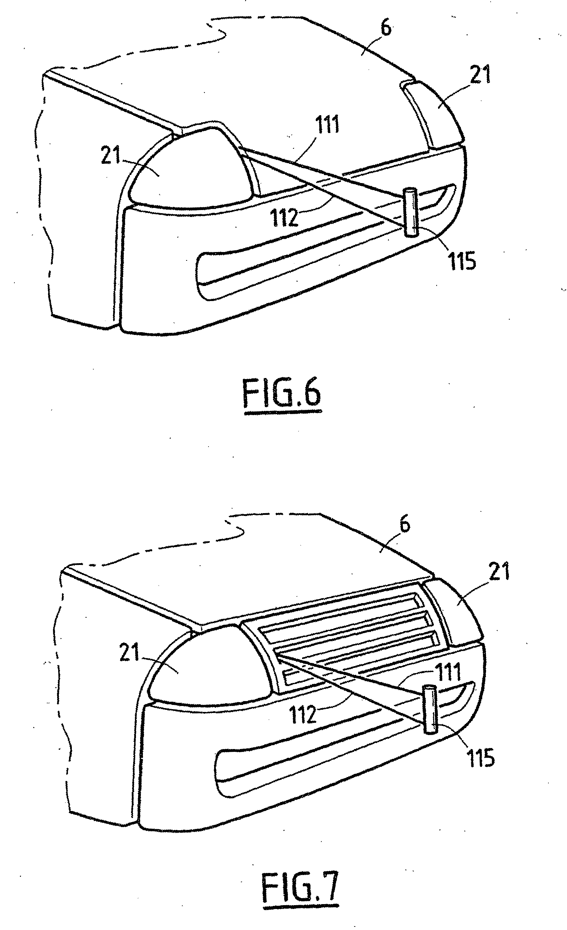

Sur les Figures 6 et 7, on a illustré de façon schématique que, pour réaliser l'opération de réglage avec l'outil 91, le capot 6 étant fermé, l'opérateur peut actionner l'outil 91 depuis une zone située à l'avant du véhicule en cours d'assemblage, à l'avant de ce dernier. Les sections de câble 111, 112 peuvent être tendues au travers de différents passages, choisis en fonction du modèle du véhicule.

Par exemple (Figure 6), les sections de câble 111, 112 peuvent être tendues au travers d'un jour existant entre le capot 6 et le bloc optique 21.

Dans un autre exemple (Figure 7), les sections de câble 111, 112 peuvent passer au travers de la calandre.

On va à présent décrire plus précisément les opérations principales d'assemblage du bloc avant dont la structure a été décrite précédemment, ainsi que les opérations principales de montage de ce bloc avant sur la caisse du véhicule, et les opérations permettant d'ajuster la position relative de l'extrémité 43A de la poutre par rapport à la face avant 7, et ainsi l'ajustement de la position du bloc optique 21 par rapport aux parties visibles du capot.

Dans une première étape du procédé de montage du bloc avant, on pré-positionne chaque bloc optique 21 sur la poutre 43. Les vis de fixation du bloc optique 21 sur la poutre 23 sont mises en position mais non serrées. On réalise un premier centrage extérieur du bloc optique sur la poutre 43 par appui d'une nervure réalisée dans la glace du bloc optique 21. On réalise ensuite le centrage ou positionnement intérieur du bloc optique 21 par appui des bossages issus de la glace du bloc optique sur les surfaces d'appui 52, 53.

L'ensemble optique ainsi obtenu, constitué d'un bloc optique 21 monté sur sa poutre 23, est ensuite placé sur un gabarit de montage, sur lequel est préalablement positionnée la face avant suivant des points de référence correspondant à des points de positionnement sur la carrosserie. Sur le gabarit de montage, on met en place chaque ensemble optique, en positionnant la deuxième extrémité 43B de la poutre 43 dans la forme simulant la position théorique de l'aile, et en positionnant la première extrémité 43A de la poutre 43 dans la forme simulant la position théorique du capot.

L'ensemble est ensuite bridé.

On fixe ensuite le manchon 60 rigidement sur la face avant 7.

On fixe ensuite rigidement chaque bloc optique 21 sur la poutre correspondante 43 au moyen des paires vis/écrous.

Le module ainsi constitué de la face avant et des ensembles optiques est placé sur une « balancelle de montage », sur laquelle est réalisée la mise en place de la peau de pare-chocs 19, par vissage sur la face avant 9 et clipage dans la gouttière 50 des poutres 43.

Le module ainsi obtenu peut être conditionné et transporté sur une chaîne d'assemblage du véhicule.

Dans une opération suivante, on présente le module précédemment obtenu en regard de la caisse du véhicule, à l'aide d'un préhenseur. Ce préhenseur est mis en référence sur les doublures d'aile et sur les points d'isostatisme de la face avant. Les blocs optiques 21, la peau de pare-chocs 19, et les poutres 43 prennent alors leurs positions relatives adéquates suivant les axes Y et Z.

Cet ensemble est fixé sur le retour d'aile, notamment par la deuxième extrémité 43B des poutres sur les bords avant d'aile 20.

On fixe ensuite, par vissage, la face avant sur les platines de longerons et les doublures d'aile.

Après retrait du préhenseur, un opérateur met en place, le capot 6 étant ouvert, comme indiqué précédemment, l'outil 91 dans les moyens de réception formés par les lumières 73, 74 du manchon 60.

Il fait passer les sections de câble 111, 112 vers l'extérieur du véhicule, comme représenté sur les Figures 6 et 7.

L'opérateur ferme ensuite le capot 6, et manoeuvre la poignée 115 après avoir mis sous tension les sections de câble 111, 112. Ainsi, il déplace, comme explicité précédemment, la première extrémité 43A par rapport à la face avant 7, et réalise l'ajustement souhaité de la position du bloc optique 21 et de la peau de pare-chocs 19 par rapport au capot 6.

Une fois cet ajustement réalisé et constaté visuellement depuis l'extérieur du véhicule, il ouvre le capot 6 et condamne le réglage en mettant en place, et en serrant, la vis 87 dans l'écrou 77.

Le blocage du doigt 65 dans le manchon 60 étant ainsi réalisé, l'opérateur retire l'outil 91 du manchon 60.

## Revendications

1. Ensemble de bloc-avant de véhicule automobile comprenant une face avant (7), qui présente une partie centrale (9) et dieux parties latérales (11), une peau de pare-chocs (19), deux poutres flexibles (43) s'étendant latéralement et formant des supports de la peau de pare-chocs (19), dont chacune a une première extrémité (43A) reliée à la partie centrale (9) et une deuxième extrémité (43B) destinée à être reliée à une partie avant (5) d'aile de carrosserie du véhicule, et deux blocs optiques (21), dont chacun est fixé rigidement à une poutre respective (43)
comprenant en outre des moyens (45) de pré-positionnement et de guidage reliant la première extrémité (43A) de la poutre à la partie centrale (9), qui sont adaptés pour assurer un pré-positionnement autorisant.un déplacement sensiblement axial (X) de ladite première extrémité (43A) par rapport à la face avant (7), et des moyens (77, 87) de blocage en position de ladite première extrémité (43A) par rapport à la face avant (7),
lesdits moyens (45) de pré-positionnement et de guidage comportant des moyens (83) d'entraînement en translation axiale (X) de la première extrémité (43A) par rapport à la face avant (7) fonctionnant par engrènement, et des moyens (73, 74) de réception, dans une position d'engrènement avec lesdits moyens d'entraînement (83), d'un outil de réglage amovible (91),
de sorte que, lorsque la première extrémité (43A) est pré-positionnée mais non bloquée en position, un actionnement de l'outil de réglage (91) provoque un déplacement axial (X) de la première extrémité (43A) par rapport à la face avant (7), et ainsi un ajustement de la position du bloc optique (21) et de la peau de pare-chocs (19) par rapport au capot (6).

2. Ensemble de bloc-avant suivant la revendication 1, **caractérisé en ce que** lesdits moyens (45) de pré-positionnement et de guidage comprennent un manchon tubulaire (60) solidaire de la face avant (7), et un doigt (65) complémentaire coaxial, solidaire de la poutre (43) du côté de sa première extrémité (43A), et susceptible de coulissement axial (X) dans ledit manchon (60).

3. Ensemble de bloc-avant suivant la revendication 2, **caractérisé en ce que** lesdits moyens de blocage comprennent un organe (77, 87) de fixation rigide du doigt (65) dans le manchon (60), tel qu'un ensemble vis-écrou, l'un parmi le doigt (65) et le manchon (60) étant formé avec une lumière oblongue (71) allongée axialement, destinée à recevoir à engagement ledit organe de fixation (77, 87) dans plusieurs positions axiales relatives du manchon (60) et du doigt (65).

4. Ensemble de bloc-avant suivant la revendication 2 ou 3, **caractérisé en ce que** lesdits moyens d'entraînement comprennent une crémaillère axiale (83) solidaire du doigt (65), pouvant coopérer avec un pignon (99) complémentaire solidaire de l'outil de réglage (91).

5. Ensemble de bloc-avant suivant la revendication 4, **caractérisé en ce que** les moyens de réception d'outil comportent des lumières (73, 74) formées en vis-à-vis dans le manchon (60), de façon à constituer des paliers de support à rotation de l'outil (91), selon un axe de rotation transversal par rapport à l'axe commun (X) du manchon (60) et du doigt (65).

6. Outil de réglage de la position d'un bloc optique et d'une peau de pare-chocs d'un ensemble de bloc-avant selon l'une quelconque des revendications 3 à 5, **caractérisé en ce qu'**il comprend un arbre (93) pouvant s'engager à rotation de façon amovible dans les moyens de réception (73, 74), un pignon (33) complémentaire de la crémaillère (83), prévu pour coopérer avec cette dernière lorsque l'arbre (93) est engagé dans les moyens de réception (73,74), et un moyen déformable (111, 112, 115) d'actionnement en rotation de l'arbre (93), adapté pour permettre, à un utilisateur placé à distance de l'arbre, d'actionner ce dernier en rotation.

7. Outil de réglage selon la revendication 6, **caractérisé en ce que** ledit moyen déformable d'actionnement comprend deux sections de câble de traction (111, 112) reliées à l'arbre (93), de façon qu'une traction exercée sur l'une des deux sections entraîne l'arbre en rotation dans un sens, et qu'une traction exercée sur l'autre section entraîne l'arbre en rotation dans l'autre sens.

8. Outil de réglage selon la revendication 7, **caractérisé en ce que** ledit moyen d'actionnement comprend une poignée de manoeuvre (115) reliant les deux sections de câble (111, 112) à distance de l'arbre.

9. Procédé d'assemblage d'un ensemble de bloc-avant selon l'une quelconque des revendications 1 à 5, et de montage d'un tel ensemble de bloc-avant sur une caisse de véhicule automobile, dans lequel on réalise successivement les étapes suivantes :
- on monte chaque bloc optique (21) sur la poutre (43) respective ;
- on pré-positionne chaque poutre (43) au niveau de sa première extrémité (43A) sur la face avant (7), et on fixe la peau de pare-chocs (19) sur l'ensemble ainsi obtenu ;
- on monte l'ensemble de bloc-avant ainsi obtenu sur la caisse du véhicule, et on fixe chaque poutre (43) par sa deuxième extrémité (43B) à la partie avant d'aile (5) respective ;
- on engage un outil de réglage (91) fonctionnant par engrènement, notamment conforme à l'une quelconque des revendications 6 à 8, dans les moyens de réception (73, 74);
- on ferme le capot (6) ;
- on manoeuvre l'outil (91) de façon à déplacer la première extrémité (43A) par rapport à la face avant (7), et ainsi à réaliser un ajustement de la position du bloc optique (21) et de la peau de pare-chocs (19), par rapport au capot (6) ;
- on ouvre le capot (6) ;
- on bloque en position la première extrémité (43A) de chaque poutre (43) par rapport à la face avant (7) ; et
- on dégage l'outil de réglage (91) des moyens de réception (73, 74).

## Claims

1. Motor vehicle front unit assembly comprising a front face (7), which has a central portion (9) and two side portions (11), a bumper skin (19), two flexible brackets (43) extending laterally and forming supports for the bumper skin (19), each having a first end (43A) connected to the central portion (9) and a second end (43B) for connection to a front portion (5) of a corresponding vehicle bodywork fender, and two light units (21), each rigidly secured to a respective one of the brackets (43),
further comprising pre-positioning and guide means (45), which connect the first end (43A) of each bracket to the central portion (9) and are suitable for ensuring a pre-positioning which allows said first end (43A) to undergo a substantially axial movement (X) relative to the front face (7), and locking means (77, 87) for locking said first end (43A) in position relative to the front face (7),
said pre-positioning and guide means (45) comprising drive means (83) for driving the first end (43A) in axial translation (X) relative to the front face (7), said means operating by meshing, and receiving means (73, 74) for receiving a releasable adjustment tool (91) in a position where it meshes with said drive means (83),
in such a way that when the first end (43A) is pre-positioned but not locked in position, actuating the adjustment tool (91) causes an axial movement (X) of the first end (43A) relative to the front face (7), and thus an adjustment to the position of the light unit (21) and of the bumper skin (19) relative to the bonnet (6).

2. Front unit assembly according to claim 1, **characterised in that** the pre-positioning and guide means (45) comprise a tubular sleeve (60) which is secured to the front face (7), and a coaxial complementary finger (65) which is secured to the bracket (43) adjacent to the first end (43A) thereof and which can undergo an axial sliding motion (X) within said sleeve (60).

3. Front unit assembly according to claim 2, **characterised in that** the locking means comprise a securing member (77, 87) for rigidly securing the finger (65) in the sleeve (60), for example a screw-and-nut assembly, one of the finger (65) and the sleeve (60) being formed with an axially extending rectangular opening (71) for engagingly receiving said securing member (77, 87) in a plurality of relative axial positions of the sleeve (60) and the finger (65).

4. Front unit assembly according to either claim 2 or claim 3, **characterised in that** the drive means comprise an axial rack (83) which is secured to the finger (65) and is suitable for cooperating with a complementary pinion (99) secured to the adjustment tool (91).

5. Front unit assembly according to claim 4, **characterised in that** the tool receiving means comprise openings (73, 74) formed facing one another in the sleeve (60) in such a way as to constitute bearings for rotatably supporting the tool (91) on an axis of rotation which is transverse to the common axis (X) of the sleeve (60) and the finger (65).

6. Tool for adjusting the position of a light unit and a bumper skin in a front unit assembly according to any one of claims 3 to 5, **characterised in that** it comprises a shaft (93) which can be removably engaged so as to rotate in the receiving means (73, 74), a pinion (99) which is complementary to the rack (83) and which is designed to cooperate therewith when the shaft (93) is engaged in the receiving means (73, 74), and deformable means (111, 112, 115) for driving the shaft (93) in rotation, which means are suitable for allowing a user who is at a distance from the shaft to turn said shaft.

7. Adjustment tool according to claim 6, **characterised in that** the deformable actuation means comprise two portions of traction cable (111, 112), connected to the shaft (93) in such a way that traction exerted on one of the two portions causes the shaft to turn in one direction and traction exerted on the other portion causes the shaft to turn in the opposite direction.

8. Adjustment tool according to claim 7, **characterised in that** the actuation means comprise a drive handle (115) which connects the two cable portions (111, 112) at a distance from the shaft.

9. Method for assembling a front unit assembly according to any one of claims 1 to 5, and for mounting a front unit assembly of this type on a motor vehicle bodywork, in which the following steps are performed in succession:
- mounting each light unit (21) on the corresponding bracket (43);
- pre-positioning each bracket (43), by the first end (43A) thereof, on the front face (7), and fixing the bumper skin (19) to the resulting assembly;
- mounting the resulting front unit assembly on the vehicle bodywork, and fixing each bracket (43), by the second end (43B) thereof, to the respective front fender portion (5);
- engaging an adjustment tool (91) which operates by meshing, in particular a tool according to any one of claims 6 to 8, in the receiving means (73, 74);
- closing the bonnet (6);
- driving the tool (91) in such a way as to move the first end (43A) relative to the front face (7), and thus to adjust the position of the light unit (21) and of the bumper skin (19) relative to the bonnet (6);
- opening the bonnet (6);
- locking the first end (43A) of each bracket (43) in position relative to the front face (7); and
- disengaging the adjustment tool (91) from the receiving means (73, 74).

## Patentansprüche

1. Frontend-Anordnung eines Kraftfahrzeuges, aufweisend eine Vorderseite (7) mit einem zentralen Abschnitt (9) und zwei seitlichen Abschnitten (11), eine Stoßfängerschale (19), zwei flexible Träger (43), die sich seitlich erstrecken und Stützen der Stoßfängerschale (19) ausbilden, von denen jede ein erstes Ende (43A), das mit dem zentralen Abschnitt (9) verbunden ist, und ein zweites Ende (43B) hat, das zum Verbinden mit einem vorderen Abschnitt (5) eines Kotflügels des Kraftfahrzeuges vorgesehen ist, und zwei Lichteinheiten (21), von denen jede an einem jeweiligen Träger (43) starr fixiert ist,
außerdem aufweisend Mittel (45) zum Vorpositionieren und zum Führen, die das erste Ende (43A) des Trägers mit dem zentralen Abschnitt (9) verbinden, die zum Sicherstellen einer Vorpositionierung angepasst sind, was eine im Wesentlichen axiale (X) Verschiebung des ersten Endes (43A) bezüglich der Vorderseite (7) ermöglicht, und Mittel (77, 87) zum Sperren der Position des ersten Endes (43A) bezüglich der Vorderseite (7),
wobei die Mittel (45) zum Vorpositionieren und zum Führen aufweisen Mittel (83) zum axialen (X) Verfahrantrieb des ersten Endes (43A) bezüglich der Vorderseite (7), der mittels Verzahnung funktioniert, und Mittel (73, 74) zur Aufnahme einer lösbaren Einstellvorrichtung (91) in einer Eingriffsposition mit den Antriebsmitteln (83),
so dass, wenn das erste Ende (43A) vorpositioniert aber in der Position nicht gesperrt ist, ein Betätigen der Einstellvorrichtung (91) eine axiale Verschiebung (X) des ersten Endes (43A) bezüglich der Vorderseite (7) und daher eine Einstellung der Position der Lichteinheit (21) und der Stoßfängerschale (19) bezüglich der Motorhaube (6) bewirkt.

2. Frontend-Anordnung gemäß Anspruch 1, **dadurch gekennzeichnet, dass** die Mittel (45) zum Vorpositionieren und zum Führen eine rohrförmige Muffe (60), die mit der Vorderseite (7) einstückig ausgebildet ist, und einen koaxial komplementären Zapfen (65) aufweisen, der mit dem Träger (43) auf der Seite des ersten Endes (43A) einstückig ausgebildet ist und in der Muffe (60) axial (X) verschiebbar ist.

3. Frontend-Anordnung gemäß Anspruch 2, **dadurch gekennzeichnet, dass** die Sperrmittel ein Teil (77, 87) zur starren Fixierung des Zapfens (65) in der Muffe (60) aufweisen, wie bei einer Schrauben-Mutter-Anordnung, wobei einer von dem Zapfen (65) und der Muffe (60) mit einem sich axial erstreckenden Langloch (71) ausgebildet ist, das zum eingreifenden Aufnehmen des Fixierungsteils (77, 87) in mehreren axialen Relativ-Positionen der Muffe (60) und des Zapfens (65) vorgesehen ist.

4. Frontend-Anordnung gemäß Anspruch 2 oder 3, **dadurch gekennzeichnet, dass** die Antriebsmittel eine mit dem Zapfen (65) einstückig ausgebildete, axiale Zahnstange (83) aufweisen, die mit einem komplementären Ritzel (99) zusammenwirkt, das mit der Einstellvorrichtung (91) einstückig ausgebildet ist.

5. Frontend-Anordnung gemäß Anspruch 4, **dadurch gekennzeichnet, dass** die Mittel zur Aufnahme der Vorrichtung in der Muffe (60) gegenüberliegend ausgebildete Öffnungen (73, 74) aufweisen, derart dass sie Drehstützlager der Vorrichtung (91) gemäß einer Drehachse bilden, die quer bezüglich der gemeinsamen Achse (X) der Muffe (60) und des Zapfens (65) ist.

6. Vorrichtung zum Einstellen der Position einer Lichteinheit und einer Stoßfängerschale einer Frontendanordnung gemäß irgendeinem der Ansprüche 3 bis 5, **dadurch gekennzeichnet, dass** sie aufweist eine Welle (93), die in lösbaren Dreheingriff mit den Aufnahmemitteln (73, 74) bringbar ist, ein Ritzel (99), das komplementär zu der Zahnstange (83) ist, das zum Zusammenwirken mit der Letzteren vorgesehen ist, wenn die Welle (93) in Eingriff mit den Aufnahmemitteln (73, 74) steht, und ein zum Drehbetätigen der Welle (93) verformbares Mittel (111, 112, 115), das einem im Abstand von der Welle positionierten Nutzer ermöglicht, das Letztere in Drehung zu versetzen.

7. Einstellvorrichtung gemäß Anspruch 6, **dadurch gekennzeichnet, dass** das verformbare Betätigungs-Mittel zwei mit der Welle (93) verbundene Zugkabelteilabschnitte (111, 112) aufweist, derart dass ein an einem der beiden Teilabschnitte ausgeübter Zug, die Welle in der einen Richtung in Drehung versetzt, und dass ein an dem anderen Teilabschnitt ausgeübter Zug die Welle in der anderen Richtung in Drehung versetzt.

8. Einstellvorrichtung gemäß Anspruch 7, **dadurch gekennzeichnet, dass** das Betätigungsmittel einen Betätigungsgriff (115) aufweist, der die beiden Kabelteilabschnitte (111, 112) mit einem Abstand von der Welle verbindet.

9. Verfahren zum Zusammenbau einer Frontendanordnung gemäß irgendeinem der Ansprüche 1 bis 5 und zur Montage einer derartigen Frontendanordnung an einem Chassis eines Kraftfahrzeuges, in dem die folgenden Schritte nacheinander durchgeführt werden:
- Anbringen jeder Lichteinheit (21) an dem jeweiligen Träger (43),
- Vorpositionieren jedes Trägers (43) auf Höhe seines ersten Endes (43A) an der Vorderseite (7) und Befestigen der Stoßfängerschale (19) an der so erzielten Anordnung,
- Anbringen der so erzielten Frontendanordnung an dem Chassis des Fahrzeuges und Befestigen jedes Trägers (43) mittels seines zweiten Endes (43B) an dem vorderen Abschnitt des jeweiligen Kotflügels (5),
- In-Eingriff-Bringen einer mittels Verzahnung funktionierenden Einstellvorrichtung, insbesondere gemäß irgendeinem der Ansprüche 6 bis 8, mit den Aufnahmemitteln (73, 74),
- Schließen der Motorhaube (6),
- Betätigen der Vorrichtung (91), derart dass das erste Ende (43A) bezüglich der Vorderfläche (7) verschoben wird und daher eine Einstellung der Position der Lichteinheit (21) und der Stoßfängerschale (19) bezüglich der Motorhaube (6) durchgeführt wird,
- Öffnen der Motorhaube (6),
- Sperren der Position des ersten Endes (43A) von jedem Träger (43) bezüglich der Vorderseite (7), und
- Loslösen der Einstellvorrichtung (91) aus den Aufnahmemitteln (73, 74).
